# FASCICULE DE BREVET EUROPEEN

(11) **EP 3 244 080 B1**
(45) Date de publication et mention de la délivrance du brevet: **19.12.2018**
(21) Numéro de dépôt: 17170569.2
(22) Date de dépôt: 11.05.2017
(51) Int. Cl.: F16C 19/38, F16C 43/06

(54) **PROCÉDÉ D ASSEMBLAGE D'UN PALIER À ROULEMENT**
VERFAHREN ZUM ZUSAMMENBAU EINES WÄLZLAGERS
METHOD FOR ASSEMBLING A ROLLER BEARING

(30) Priorité: 12.05.2016 FR 1654246
(43) Date de publication de la demande: 15.11.2017
(73) Titulaire: NTN-SNR Roulements, 74010 Annecy (FR)
(72) Inventeur: MAILLE, Renaud, Tokyo, Tokyo 140-0004 (JP)
(74) Mandataire: Sayettat, Julien Christian

(56) Documents cités:
- DE-A1-102010 023 206
- US-A- 1 949 824
- US-A- 2 447 838

## Description

L'invention concerne un procédé d'assemblage d'un palier à roulement comprenant un organe extérieur et un organe intérieur pourvus chacun de deux pistes annulaires de roulement qui sont espacées axialement de sorte à former entre lesdits organes deux chemins de roulement dans lesquels est disposée respectivement une rangée de corps roulants pour permettre la rotation relative desdits organes autour d'un axe.

En particulier, l'invention s'applique aux paliers à roulement de type conique dans lesquels des rouleaux coniques sont utilisés en relation avec des pistes de roulement tronconiques équipant un organe extérieur appelé cuvette et un organe intérieur appelé cône.

Plus précisément, chacune des pistes de roulement présente une géométrie tronconique s'étendant entre un bord externe et un bord interne et sur laquelle les rouleaux coniques sont en appui par l'intermédiaire de leur périphérie tronconique. En outre, les rouleaux de chacune des rangées sont retenus respectivement dans un logement d'une cage de rétention en pouvant tourner autour de leur axe propre.

Ce type de palier, de par son aptitude à supporter des efforts radiaux et axiaux importants, trouve particulièrement son application pour le guidage en rotation d'une roue de véhicule automobile. En particulier, l'organe extérieur peut être tournant et comprendre des moyens de fixation de la roue tandis que l'organe intérieur est fixe et comprend des moyens de fixation sur un élément de suspension du véhicule.

Selon une réalisation connue pour une telle application, le bord interne de chacune des pistes de roulement présente un diamètre qui est inférieur au diamètre de son bord externe afin que les rangées de rouleaux coniques soient en contact oblique dans les chemins de roulement suivant un montage en O.

En outre, l'organe extérieur peut présenter deux collets formés respectivement sur le bord externe d'une piste extérieure en s'étendant radialement entre le diamètre externe dudit bord et un diamètre de collet qui est inférieur audit diamètre externe. En particulier, notamment lorsque le palier est soumis à des charges axiales, les collets permettent de garantir la cohésion dudit palier. Un tel assemblage est connu par exemple de US 1 949 824.

Toutefois, la présence des collets sur l'organe extérieur contraint l'assemblage du palier puisque ledit organe extérieur ne peut pas être monté axialement autour des rouleaux préalablement disposés sur les pistes de roulement de l'organe intérieur.

Ainsi, il est nécessaire, pour chaque rangée, de disposer les rouleaux à l'intérieur de la piste de roulement extérieure avant de monter la cage de rétention sur ladite rangée, puis de monter l'organe intérieur dans l'organe extérieur en disposant les rouleaux retenus par les cages sur les pistes de roulement intérieures respectives.

Toutefois, pour permettre le montage d'une cage sur une rangée de rouleaux, il est nécessaire de retenir lesdits rouleaux à l'encontre du déplacement relatif de ladite cage par rapport à l'organe extérieur, afin d'assurer l'insertion de chacun des rouleaux dans son logement de rétention de la cage.

Or, si cette retenue est possible au moyen d'un outil adapté pour le montage de la première cage sur la première rangée de rouleaux, elle devient impossible pour la deuxième cage faute de pouvoir disposer ledit outil au travers de ladite première rangée retenue par ladite première cage.

L'invention vise à perfectionner l'art antérieur en proposant notamment un procédé d'assemblage d'un palier à roulement conique dont l'organe extérieur est pourvu de deux pistes de roulement équipées chacune d'un collet, dans lequel les cages de rétention des rouleaux de chacune des rangées peuvent être montées de façon simple afin de pouvoir fiabiliser ledit assemblage.

A cet effet, selon un premier aspect, l'invention propose un procédé d'assemblage d'un palier à roulement comprenant un organe extérieur et un organe intérieur pourvus chacun de deux pistes annulaires de roulement qui sont espacées axialement de sorte à former entre lesdits organes deux chemins de roulement dans lesquels est disposée respectivement une rangée de rouleaux coniques pour permettre la rotation relative desdits organes autour d'un axe, les rouleaux de chacune des rangées étant retenus respectivement dans un logement d'une cage de rétention en pouvant tourner autour de leur axe propre, chacune desdites pistes présentant une géométrie tronconique s'étendant entre un bord externe et un bord interne et sur laquelle les rouleaux coniques sont en appui par l'intermédiaire de leur périphérie tronconique, le bord interne de chacune des pistes présentant un diamètre qui est inférieur au diamètre de son bord externe afin que les rangées de rouleaux coniques soient en contact oblique dans les chemins de roulement suivant un montage en O, l'organe extérieur présentant deux collets formés respectivement sur le bord externe d'une piste extérieure en s'étendant radialement entre le diamètre externe dudit bord et un diamètre de collet qui est inférieur audit diamètre externe, le bord interne d'au moins une piste extérieure étant équipé d'un élément de maintien qui s'étend radialement entre les pistes extérieures, ledit élément étant agencé pour former une butée de retenue axiale de la rangée de rouleaux à l'intérieur de ladite piste extérieure, ledit procédé prévoyant, pour chaque rangée, de disposer les rouleaux à l'intérieur de la piste de roulement extérieure avant de monter la cage de rétention sur ladite rangée, puis de monter l'organe intérieur dans l'organe extérieur en disposant les rouleaux retenus par les cages sur les pistes de roulement intérieures respectives, ledit procédé prévoyant en outre de retenir les rouleaux d'au moins une rangée en butée axiale sur l'élément de maintien lors du montage de la cage sur ladite rangée.

D'autres objets et avantages de l'invention apparaîtront dans la description qui suit, faite en référence aux figures jointes, dans lesquelles :
- la figure 1 est une vue de côté d'un palier à roulement selon un mode de réalisation de l'invention, la figure 1a étant une vue en coupe selon la ligne AA de la figure 1 et la figure 1b étant un agrandissement de la zone B de la figure 1a ;
- la figure 2 est une coupe analogue à celle de la figure 1a pour un palier à roulement selon un autre mode de réalisation de l'invention, la figure 2a étant un agrandissement de la zone A de la figure 2 ;
- la figure 3 est un agrandissement analogue à celui de la figure 2a pour un palier à roulement selon un autre mode de réalisation de l'invention.

En relation avec les figures, on décrit ci-dessous un palier à roulement comprenant un organe extérieur 1 et un organe intérieur 2 pourvus chacun de deux pistes annulaires 1a, 1b ; 2a, 2b de roulement qui sont espacées axialement de sorte à former entre lesdits organes deux chemins de roulement dans lesquels est disposée respectivement une rangée 3a, 3b de rouleaux coniques 3 pour permettre la rotation relative desdits organes autour d'un axe X.

Dans la description, les termes « extérieur » et « intérieur » sont définis par rapport à l'axe X de rotation du palier, respectivement pour une localisation éloignée et proche dudit axe. Les termes « axial » et « radial » sont également définis par rapport à l'axe X, respectivement pour une direction suivant cet axe et s'éloignant ou se rapprochant de lui. Par ailleurs, les termes « externe » et « interne » sont pris en référence au palier, à savoir vers le centre du palier pour « interne » et opposé pour « externe ».

En particulier, chacune des pistes de roulement 1a, 1b ; 2a, 2b présente une géométrie tronconique s'étendant entre un bord externe et un bord interne et sur laquelle les rouleaux coniques 3 sont en appui par l'intermédiaire de leur périphérie tronconique.

Par ailleurs, le bord interne de chacune des pistes 1a, 1b ; 2a, 2b présente un diamètre qui est inférieur au diamètre de son bord externe afin que les rangées 3a, 3b de rouleaux coniques 3 soient en contact oblique dans les chemins de roulement suivant un montage en O.

De façon avantageuse, les paliers selon l'invention, de par leur aptitude à supporter des efforts radiaux et axiaux importants, trouvent particulièrement leur application pour le guidage en rotation d'une roue de véhicule automobile. En particulier, l'organe extérieur 1 peut être tournant et comprendre des moyens de fixation de la roue tandis que l'organe intérieur 2 est fixe et comprend des moyens de fixation sur un élément de suspension du véhicule.

Le palier à roulement est dit inversé en ce que l'organe extérieur 1 présente deux collets 4a, 4b formés respectivement sur le bord externe d'une piste extérieure 1a, 1b en s'étendant radialement entre le diamètre externe dudit bord et un diamètre de collet 4a, 4b qui est inférieur audit diamètre externe.

En particulier, chaque collet 4a, 4b est sous la forme d'un épaulement annulaire 5a, 5b qui est réalisé sur chaque côté de l'organe extérieur 1. Selon le mode de réalisation représenté, l'organe intérieur 2 est dépourvu de collet externe, les bords externes de chacune des pistes intérieures 2a, 2b débouchent de part et d'autre de l'organe intérieur 2.

Les collets 4a, 4b permettent notamment le maintien des rouleaux coniques 3 entre les pistes de roulement 1a, 1b ; 2a, 2b, notamment lorsque le palier est soumis à des charges axiales et/ou radiales. En particulier, la présence des collets 4a, 4b sur l'organe extérieur 1 induit, par rapport à un collet solidaire de l'organe intérieur 2, une vitesse de glissement desdits collets qui est réduite, une meilleure lubrification grâce à la centrifugation sur les collets 4a, 4b et un risque de grippage repoussé.

En particulier, chaque collet 4a, 4b présente une portée radiale 6a, 6b de roulement sur laquelle les rouleaux coniques 3 sont en appui par l'intermédiaire d'une face latérale 7, ladite portée radiale s'étendant entre un bord extérieur et un bord intérieur en présentant une géométrie tronconique, lesdits bords étant annulaires et le diamètre dudit bord extérieur étant supérieur au diamètre dudit bord intérieur.

Le palier comprend deux cages de rétention 8a, 8b qui sont agencées pour assurer le maintien des rouleaux 3 de respectivement une rangée 3a, 3b dans le chemin de roulement conique lors de la rotation du palier. Pour ce faire, les cages de rétention 8a, 8b sont identiques en étant notamment pourvues de logements dans lesquels respectivement un rouleau 3 est retenu en pouvant tourner autour de son axe propre, suivant un angle prédéterminé par rapport à l'axe X de roulement du palier.

De façon conventionnelle, chacune des cages de rétention 8a, 8b présente une couronne extérieure 9, une couronne intérieure 10 et une pluralité de ponts 11 s'étendant entre lesdites couronnes de sorte à former entre deux ponts 11 adjacents et un segment de chacune desdites couronnes un logement dans lequel un rouleau 3 est retenu.

Dans les modes de réalisation représentés, la couronne intérieure 10 est inscrite dans un diamètre qui est inférieur au diamètre dans lequel est inscrite la couronne extérieure 9, chaque couronne 9, 10 étant disposée en regard axial de respectivement une face latérale 7 d'un rouleau 3.

Pour assembler le palier à roulement, en raison de la présence des collets 4a, 4b sur l'organe extérieur 1, l'invention prévoit un procédé dans lequel, pour chaque rangée 3a, 3b, les rouleaux 3 sont disposés à l'intérieur de la piste de roulement extérieure 1a, 1b avant de monter la cage de rétention 8a, 8b sur ladite rangée. Ensuite, l'organe intérieur 2 est monté dans l'organe extérieur 1 en disposant les rouleaux 3 retenus par les cages 8a, 8b sur les pistes de roulement intérieures 2a, 2b respectives.

En outre, le procédé prévoit de retenir les rouleaux 3 d'au moins une rangée 3a, 3b en butée axiale lors du montage de la cage 8a, 8b sur ladite rangée, afin de pouvoir fiabiliser la disposition de chacun des rouleaux 3 dans son logement de rétention respectif. En particulier, cette fiabilisation est obtenue lorsque la cage de rétention 8a, 8b est montée sur la rangée 3a, 3b de rouleaux 3 par translation axiale relative de ladite cage de rétention par rapport à l'organe extérieur 1.

En effet, lors de cette translation, la couronne intérieure 10 vient en appui sur la périphérie des rouleaux 3 pour pouvoir disposer lesdits rouleaux dans leur logement de rétention, ledit appui devant être suffisant pour contraindre ladite couronne à venir se disposer en regard de la face latérale 12 des rouleaux 3.

Pour ce faire, le bord interne d'au moins une piste extérieure 1a, 1b est équipé d'un élément de maintien 13 qui s'étend radialement entre les pistes extérieures 1a, 1b, ledit élément étant agencé pour former une butée de retenue axiale de la rangée 3a, 3b de rouleaux 3 à l'intérieur de ladite piste extérieure. En particulier, l'élément de maintien 13 comprend au moins une portée 13a, 13b qui est disposée en interférence axiale avec les faces latérales 12 des rouleaux 3 d'une rangée 3a, 3b.

Ainsi, les rouleaux 3 d'au moins une rangée 3a, 3b étant retenus axialement sur l'élément de maintien 13, ils peuvent être disposés dans leur logement de rétention respectif d'une cage 8a, 8b même si les rouleaux 3 de l'autre rangée 3b, 3a ont été préalablement disposés dans les logements de rétention de l'autre cage 8b, 8a.

En particulier, chacune des pistes extérieures 1a, 1b peut être équipée d'un élément de maintien 13, en une pièce ou séparé, ou seule une piste extérieure 1a, 1b peut en être équipée, les rouleaux 3 pouvant être maintenus sur l'autre piste 1a, 1b par un outil lors du montage de la cage 8a, 8b.

Dans les modes de réalisation représentés, la portée d'interférence 13a, 13b est disposée radialement en définissant avec le collet extérieur 4a, 4b la piste extérieure 1a, 1b sur laquelle la périphérie tronconique des rouleaux 3 est disposée en appui. En particulier, la distance entre le collet 4a, 4b et la portée d'interférence 13a, 13b est légèrement supérieure à la longueur des rouleaux 3 afin de permettre leur disposition à l'intérieur de la piste extérieure 1a, 1b avec le collet 4a, 4b et la portée d'interférence 13a, 13b en regard axial de respectivement une face latérale 7, 12 desdits rouleaux.

De façon avantageuse, le bord interne de chacune des pistes extérieures 1a, 1b est équipé d'un élément de maintien 13 qui est agencé pour former une butée de retenue axiale pour respectivement une rangée 3a, 3b de rouleaux 3. Ainsi, chaque rangée 3a, 3b étant retenue axialement, il est possible de s'exonérer de l'utilisation d'un outil de maintien de la première rangée 3a, 3b lors du montage de la cage 8a, 8b.

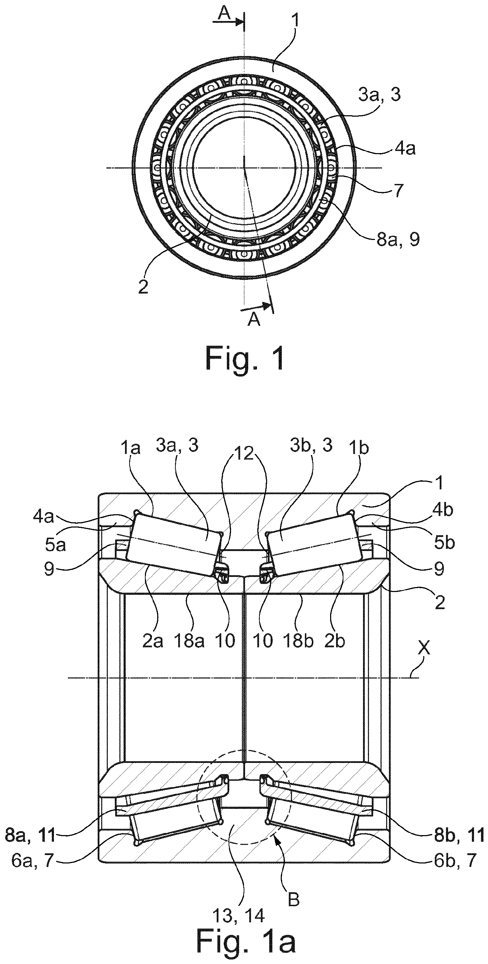

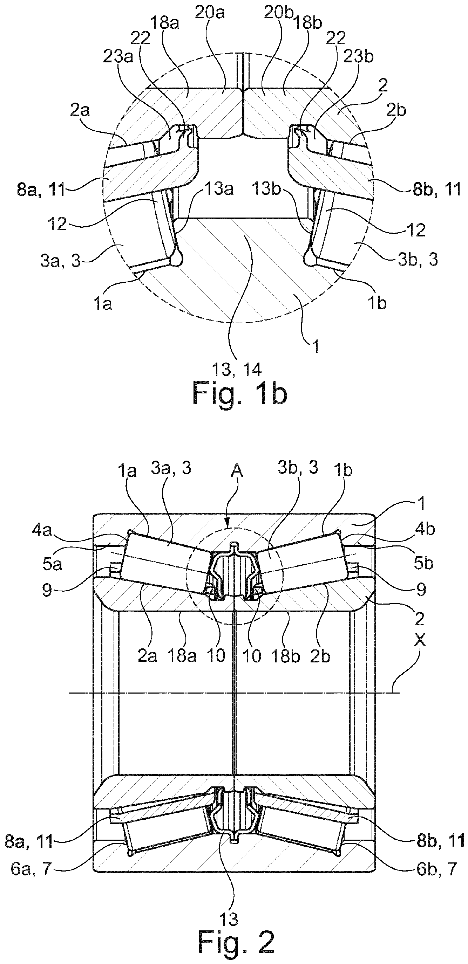

En relation avec les figures 1, l'élément de maintien 13 est formé dans l'organe extérieur 1, notamment en prévoyant d'équiper le bord interne des pistes extérieures 1a, 1b d'un collet respectif. Plus précisément, un épaulement 14 est formé entre les pistes extérieures 1a, 1b, les collets s'étendent axialement de part et d'autre dudit épaulement.

En particulier, comme les collets extérieurs 4a, 4b, les collets intérieurs peuvent être obtenus par usinage de l'organe extérieur 1, notamment en présentant une portée radiale 13a, 13b s'étendant entre un bord extérieur et un bord intérieur en présentant une géométrie tronconique, sur laquelle les rouleaux 3 d'une rangée 3a, 3b sont retenus axialement par l'intermédiaire de leur face latérale 12.

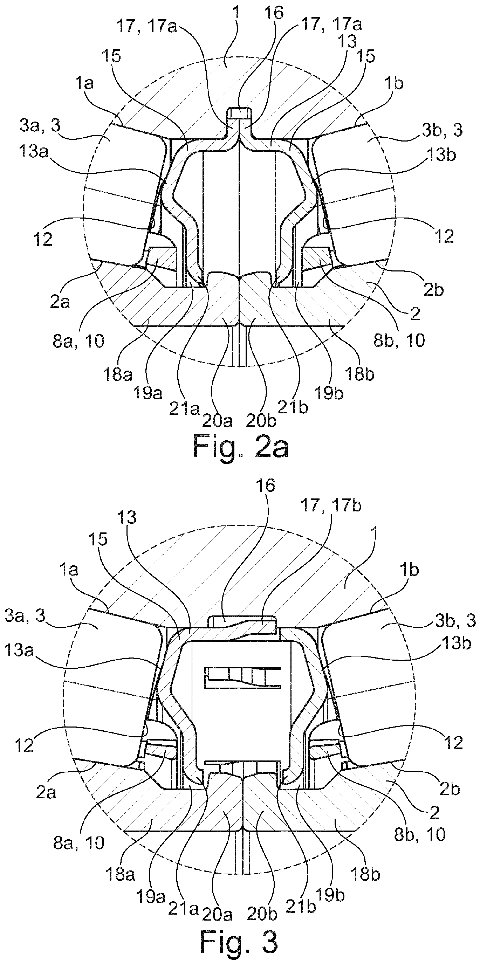

En relation avec les figures 2 et 3, l'élément de maintien 13 est rapporté dans l'organe extérieur 1. En particulier, les bords internes peuvent être équipés d'un même élément de maintien 13 (figure 3) ou de deux éléments de maintien 13 qui sont associés entre eux (figure 2).

Dans les modes de réalisation représentés, l'élément de maintien 13 comprend au moins une armature 15, par exemple réalisée en tôle, présentant une portée 13a, 13b sensiblement radiale formant butée de retenue axiale de la rangée 3a, 3b de rouleaux 3. En variante non représentée, l'élément de maintien 13 peut être réalisé par un cordon de matière polymérique, par exemple présentant des propriétés lubrifiantes, ledit cordon pouvant se détériorer en cours de fonctionnement du palier.

En outre, l'organe extérieur 1 présente une rainure 16 dans laquelle l'élément de maintien 13 est immobilisé axialement, l'armature 15 comprenant une extension 17 engagée dans la rainure 16 pour assurer l'immobilisation axiale de l'élément de maintien 13. En variante non représentée, l'élément de maintien 13 peut être disposé en appui axial sur une rangée 3a, 3b de rouleaux 3 sur laquelle la cage 8a, 8b a été préalablement montée. Selon une autre variante, l'armature 15 peut être emmanchée dans l'organe extérieur 1.

Dans le mode de réalisation des figures 2, deux armatures annulaires 15 sont prévues en présentant chacune une extension extérieure 17a sensiblement axiale qui est engagée dans la rainure 16 en assurant l'association desdites armatures pour former l'élément de maintien 13.

Sur la figure 3, l'élément de maintien 13 comprend une armature annulaire 15 de section en U renversé dont la base présente des pattes 17b sensiblement radiales d'encliquetage dans la rainure 16 de l'organe extérieur 1.

Dans les modes de réalisation représentés, l'organe extérieur 1 est monobloc et l'organe intérieur 2 présente deux bagues 18a, 18b distinctes sur lesquelles respectivement une piste intérieure 2a, 2b est formée, l'élément de maintien 13 étant en outre agencé pour solidariser les bagues 18a, 18b entre elles pour former l'organe intérieur 2.

En particulier, cette réalisation permet, en montant chacune des bagues 18a, 18b dans l'organe extérieur 1 en les solidarisant entre elles au moyen de l'élément de maintien 13 pour former l'organe intérieur 2, d'assurer la cohésion du palier à roulement avant son montage dans son application, notamment lors du transport ou des manipulations.

Pour ce faire, chacune des bagues 18a, 18b présente une rainure 19a, 19b formée dans une extension interne 20a, 20b du bord interne de la piste intérieure 2a, 2b, l'élément de maintien 13 présentant deux pattes 21a, 21b engagées dans respectivement une desdites rainures pour assurer la tenue axiale desdites bagues.

Plus précisément, sur les figures 2, une extension intérieure de chacune des armatures 15 est engagée dans une des rainures 19a, 19b et, sur la figure 3, les branches du U sont engagées respectivement dans une desdites rainures. En particulier, la cohésion de l'élément de maintien 13 permet un effet de pince pour solidariser axialement les bagues intérieures 18a, 18b entre elles.

Par ailleurs, le mode de réalisation des figures 1 prévoit que la couronne intérieure 10 des cages 8a, 8b présente une saillie annulaire 22, par exemple sous la forme d'une série de crochets équirépartis ou non, qui est disposée dans une rainure 23a, 23b de l'extension interne 20a, 20b du bord interne de la piste intérieure 2a, 2b des bagues 18a, 18b, afin d'assurer un encliquetage desdites cages sur lesdites bagues.

## Revendications

1. Procédé d'assemblage d'un palier à roulement, ledit palier comprenant un organe extérieur (1) et un organe intérieur (2) pourvus chacun de deux pistes annulaires (1a, 1b ; 2a , 2b) de roulement qui sont espacées axialement de sorte à former entre lesdits organes deux chemins de roulement dans lesquels est disposée respectivement une rangée (3a, 3b) de rouleaux coniques (3) pour permettre la rotation relative desdits organes autour d'un axe (X), les rouleaux (3) de chacune des rangées (3a, 3b) étant retenus respectivement dans un logement d'une cage de rétention (8a, 8b) en pouvant tourner autour de leur axe propre, chacune desdites pistes présentant une géométrie tronconique s'étendant entre un bord externe et un bord interne et sur laquelle les rouleaux coniques (3) sont en appui par l'intermédiaire de leur périphérie tronconique, le bord interne de chacune des pistes (1a, 1b ; 2a , 2b) présentant un diamètre qui est inférieur au diamètre de son bord externe afin que les rangées (3a, 3b) de rouleaux coniques (3) soient en contact oblique dans les chemins de roulement suivant un montage en O, l'organe extérieur (2) présentant deux collets (4a, 4b) formés respectivement sur le bord externe d'une piste extérieure (1a, 1b) en s'étendant radialement entre le diamètre externe dudit bord et un diamètre de collet qui est inférieur audit diamètre externe, le bord interne d'au moins une piste extérieure (1a, 1b) étant équipé d'un élément de maintien (13) qui s'étend radialement entre les pistes extérieures (1a, 1b), ledit élément étant agencé pour former une butée de retenue axiale de la rangée (3a, 3b) de rouleaux (3) à l'intérieur de ladite piste extérieure, ledit procédé étant **caractérisé en ce qu'**il prévoit pour chaque rangée (3a, 3b), de disposer les rouleaux (3) à l'intérieur de la piste de roulement extérieure (1a, 1b) avant de monter la cage de rétention (8a, 8b) sur ladite rangée, puis de monter l'organe intérieur (2) dans l'organe extérieur (1) en disposant les rouleaux (3) retenus par les cages (8a, 8b) sur les pistes de roulement intérieures respectives (2a, 2b), ledit procédé prévoyant en outre de retenir les rouleaux (3) d'au moins une rangée (3a, 3b) en butée axiale sur l'élément de maintien (13) lors du montage de la cage (8a, 8b) sur ladite rangée.

2. Procédé d'assemblage selon la revendication 1, **caractérisé en ce que** le bord interne de chacune des pistes extérieures (1a, 1b) est équipé d'un élément de maintien (13) qui est agencé pour former une butée de retenue axiale pour respectivement une rangée (3a, 3b) de rouleaux (3).

3. Procédé d'assemblage selon la revendication 1 ou 2, **caractérisé en ce que** l'élément de maintien (13) comprend au moins une portée (13a, 13b) qui est disposée en interférence axiale avec les faces latérales (12) des rouleaux (3) d'une rangée (3a, 3b).

4. Procédé d'assemblage selon l'une quelconque des revendications 1 à 3, **caractérisé en ce que** l'élément de maintien (13) est formé dans l'organe extérieur (1).

5. Procédé d'assemblage selon l'une quelconque des revendications 1 à 3, **caractérisé en ce que** l'élément de maintien (13) est rapporté dans l'organe extérieur (1).

6. Procédé d'assemblage selon la revendication 5 lorsqu'elle dépend de la revendication 2, **caractérisé en ce que** les bords internes de chacune des pistes extérieures (1a, 1b) sont équipés d'un même élément de maintien (13).

7. Procédé d'assemblage selon l'une des revendications 5 ou 6, **caractérisé en ce que** l'élément de maintien (13) comprend au moins une armature (15) présentant une portée (13a, 13b) sensiblement radiale formant butée de retenue axiale de la rangée (3a, 3b) de rouleaux (3).

8. Procédé d'assemblage selon l'une quelconque des revendications 5 à 7, **caractérisé en ce que** l'organe extérieur (1) présente une rainure (16) dans laquelle l'élément de maintien (13) est immobilisé axialement.

9. Procédé d'assemblage selon les revendications 7 et 8, **caractérisé en ce que** l'armature (15) comprend une extension (17, 17a, 17b) engagée dans la rainure (16) pour assurer l'immobilisation axiale de l'élément de maintien (13).

10. Procédé d'assemblage selon l'une quelconque des revendications 1 à 9, **caractérisé en ce que** l'organe intérieur (2) présente deux bagues (18a, 18b) sur lesquelles respectivement une piste intérieure (2a, 2b) est formée.

11. Procédé d'assemblage selon la revendication 10, dans lequel chacune des bagues (18a, 18b) est montée dans l'organe extérieur (1) en les solidarisant entre elles au moyen de l'élément de maintien (13) pour former l'organe intérieur (2).

12. Procédé d'assemblage selon la revendication 11, **caractérisé en ce que** chacune des bagues (18a, 18b) présente une rainure (19a, 19b) formée dans une extension interne (20a, 20b) du bord interne de la piste intérieure (2a, 2b), l'élément de maintien (13) présentant deux pattes (21a, 21b) engagées dans respectivement une desdites rainures pour assurer la tenue axiale desdites bagues.

13. Procédé d'assemblage selon l'une quelconque des revendications 1 à 12, **caractérisé en ce que** la cage de rétention (8a, 8b) est montée sur la rangée (3a, 3b) de rouleaux (3) par translation axiale relative de ladite cage de rétention par rapport à l'organe extérieur (1).

## Patentansprüche

1. Verfahren zum Zusammenbauen eines Rollenlagers, wobei das Lager ein äußeres Glied (1) und ein inneres Glied (2) umfasst, die jedes mit zwei ringförmigen Rollspuren (1a, 1b; 2a, 2b) versehen sind, welche axial beabstandet sind, sodass sie zwischen den Glieder zwei Rollbahnen bilden, in denen jeweils eine Reihe (3a, 3b) von Kegelrollen (3) angeordnet ist, um die relative Rotation der Glieder um eine Achse (X) herum zu ermöglichen, wobei die Rollen (3) jeder der Reihen (3a, 3b) jeweils in einer Aufnahme eines Rückhaltekäfigs (8a, 8b) so zurückgehalten werden, dass sie um ihre eigene Achse herum drehen können, wobei jede der Spuren eine kegelstumpfförmige Geometrie aufweist, die sich zwischen einer Außenkante und einer Innenkante erstreckt und an der die Kegelrollen (3) mittels ihres kegelstumpfförmigen Umfangs anliegen, wobei die Innenkante jeder der Spuren (1a, 1b; 2a, 2b) einen Durchmesser aufweist, der kleiner ist als der Durchmesser ihrer Außenkante, damit sich die Reihen (3a, 3b) von Kegelrollen (3) einer O-Anordnung gemäß in den Rollbahnen in Schrägkontakt befinden, wobei das äußere Glied (2) zwei Krägen (4a, 4b) aufweist, die jeweils an der Außenkante einer äußeren Spur (1a, 1b) so gebildet sind, dass sie sich radial zwischen dem Außendurchmesser der Kante und einem Kragendurchmesser erstrecken, der kleiner als der Außendurchmesser ist, wobei die Innenkante mindestens einer äußeren Spur (1a, 1b) mit einem Halteelement (13) ausgestattet ist, das sich radial zwischen den äußeren Spuren (1a, 1b) erstreckt, wobei das Element dafür eingerichtet ist, einen axialen Rückhalteanschlag der Reihe (3a, 3b) von Rollen (3) im Inneren der äußeren Spur zu bilden, wobei das Verfahren **dadurch gekennzeichnet ist, dass** es für jede Reihe (3a, 3b) vorsieht, die Rollen (3) im Inneren der äußeren Rollspur (1a, 1b) anzuordnen, bevor der Rückhaltekäfig (8a, 8b) an der Reihe montiert wird, und anschließend das innere Glied (2) so im äußeren Glied (1) zu montieren, dass die von den Käfigen (8a, 8b) zurückgehaltenen Rollen (3) an den jeweiligen inneren Rollspuren (2a, 2b) angeordnet werden, wobei das Verfahren weiter vorsieht, die Rollen (3) mindestens einer Reihe (3a, 3b) beim Montieren des Käfigs (8a, 8b) an der Reihe in axialem Anschlag am Halteelement (13) zurückzuhalten.

2. Zusammenbauverfahren nach Anspruch 1, **dadurch gekennzeichnet, dass** die Innenkante jeder der äußeren Spuren (1a, 1b) mit einem Halteelement (13) ausgestattet ist, das dafür eingerichtet ist, einen axialen Rückhalteanschlag für jeweils eine Reihe (3a, 3b) von Rollen (3) zu bilden.

3. Zusammenbauverfahren nach Anspruch 1 oder 2, **dadurch gekennzeichnet, dass** das Halteelement (13) mindestens eine Spannweite (13a, 13b) umfasst, die in axialer Interferenz mit den Seitenflächen (12) der Rollen (3) einer Reihe (3a, 3b) angeordnet ist.

4. Zusammenbauverfahren nach einem der Ansprüche 1 bis 3, **dadurch gekennzeichnet, dass** das Halteelement (13) im äußeren Glied (1) gebildet ist.

5. Zusammenbauverfahren nach einem der Ansprüche 1 bis 3, **dadurch gekennzeichnet, dass** das Halteelement (13) im äußeren Glied (1) angebracht ist.

6. Zusammenbauverfahren nach Anspruch 5 in Abhängigkeit von Anspruch 2, **dadurch gekennzeichnet, dass** die Innenkanten jeder der äußeren Spuren (1a, 1b) mit ein und demselben Halteelement (13) ausgestattet sind.

7. Zusammenbauverfahren nach einem der Ansprüche 5 oder 6, **dadurch gekennzeichnet, dass** das Halteelement (13) mindestens eine Bewehrung (15) aufweist, die eine im Wesentlichen radiale Spannweite (13a, 13b) aufweist, welche einen axialen Rückhalteanschlag der Reihe (3a, 3b) von Rollen (3) bildet.

8. Zusammenbauverfahren nach einem der Ansprüche 5 bis 7, **dadurch gekennzeichnet, dass** das äußere Glied (1) eine Rille (16) aufweist, in der das Halteelement (13) axial fixiert wird.

9. Zusammenbauverfahren nach den Ansprüchen 7 und 8, **dadurch gekennzeichnet, dass** die Bewehrung (15) eine Erstreckung (17, 17a, 17b) umfasst, die mit der Rille (16) in Eingriff gebracht wird, um die axiale Fixierung des Halteelements (13) sicherzustellen.

10. Zusammenbauverfahren nach einem der Ansprüche 1 bis 9, **dadurch gekennzeichnet, dass** das innere Glied (2) zwei Ringe (18a, 18b) aufweist, an denen jeweils eine innere Spur (2a, 2b) gebildet ist.

11. Zusammenbauverfahren nach Anspruch 10, wobei jeder der Ringe (18a, 18b) so im äußeren Glied (1) montiert wird, dass dieselben mittels des Halteelements (13) fest miteinander verbunden werden, um das innere Glied (2) zu bilden.

12. Zusammenbauverfahren nach Anspruch 11, **dadurch gekennzeichnet, dass** jeder der Ringe (18a, 18b) eine Rille (19a, 19b) aufweist, die in einer Innenerstreckung (20a, 20b) der Innenkante der inneren Spur (2a, 2b) gebildet ist, wobei das Halteelement (13) zwei Klauen (21a, 21b) aufweist, die mit jeweils einer der Rillen in Eingriff gebracht werden, um die axiale Führung der Ringe sicherzustellen.

13. Zusammenbauverfahren nach einem der Ansprüche 1 bis 12, **dadurch gekennzeichnet, dass** der Rückhaltekäfig (8a, 8b) durch relative axiale Translation des Rückhaltekäfigs in Bezug auf das äußere Glied (1) an der Reihe (3a, 3b) von Rollen (3) montiert wird.

## Claims

1. Method for assembling a roller bearing, said bearing comprising an outer member (1) and an inner member (2), each provided with two annular roller tracks (1a, 1b; 2a, 2b) which are axially spaced apart so as to form between said members two roller tracks wherein is arranged respectively a row (3a, 3b) of tapered rollers (3) to make it possible for the relative rotation of said members around an axis (X), the rollers (3) of each of the rows (3a, 3b) being retained respectively in a housing of a retention cage (8a, 8b) by being able to rotate around their own axis, each one of said tracks having a truncated geometry extending between an outer edge and an inner edge and on which the tapered rollers (3) are born by way of the truncated periphery thereof, the inner edge of each of the tracks (1a, 1b; 2a, 2b) having a diameter which is less than the diameter of the outer edge thereof such that the rows (3a, 3b) of tapered rollers (3) are in oblique contact in the roller tracks according to an O-shaped assembly, the outer member (2) having two collars (4a, 4b) formed respectively on the outer edge of an outer track (1a, 1b) by extending radially on the outer diameter of said edge and a collar diameter which is less than said outer diameter, the inner edge of at least one outer track (1a, 1b) being provided with a holding element (13) which extends radially between the outer tracks (1a, 1b), said element being arranged to form a stop for axially retaining the row (3a, 3b) of rollers (3) inside said outer track, said method being **characterised in that** it provides for each row (3a, 3b), to have rollers (3) inside the outer roller track (1a, 1b) before raising the retention cage (8a, 8b) over said row, then to raise the inner member (2) in the outer member (1) by arranging the rollers (3) retained by the cages (8a, 8b) on the respective inner roller tracks (2a, 2b), said method further providing to retain the rollers (3) of at least one row (3a, 3b) axially stopped on the holding element (13) during the mounting of the cage (8a, 8b) on said row.

2. Assembly method according to claim 1, **characterised in that** the inner edge of each of the outer tracks (1a, 1b) is provided with a holding element (13) which is arranged to form an axial retaining stop for respectively a row (3a, 3b) of rollers (3).

3. Assembly method according to claim 1 or 2, **characterised in that** the holding element (13) comprises at least one bearing surface (13a, 13b) which is arranged in axial interference with the side faces (12) of the rollers (3) of a row (3a, 3b).

4. Assembly method according to any one of claims 1 to 3, **characterised in that** the holding element (13) is formed in the outer member (1).

5. Assembly method according to any one of claims 1 to 3, **characterised in that** the holding element (13) is added in the outer member (1).

6. Assembly method according to claim 5, when it depends on claim 2, **characterised in that** the inner edges of each of the outer tracks (1a, 1b) are provided with one same holding element (13).

7. Assembly method according to one of claims 5 or 6, **characterised in that** the holding element (13) comprises at least one frame (15) having a substantially radial bearing surface (13a, 13b) forming a stop for axially retaining the row (3a, 3b) of rollers (3).

8. Assembly method according to any one of claims 5 to 7, **characterised in that** the outer member (1) has a groove (16) wherein the holding element (13) is axially immobilised.

9. Assembly method according to claims 7 and 8, **characterised in that** the frame (15) comprises an extension (17, 17a, 17b) engaged in the groove (16) to ensure the axial immobilisation of the holding element (13) .

10. Assembly method according to any one of claims 1 to 9, **characterised in that** the inner member (2) has two rings (18a, 18b) on which respectively an inner track (2a, 2b) is formed.

11. Assembly method according to claim 10, wherein each of the rings (18a, 18b) is mounted in the outer member (1) by securing them to each other by means of the holding element (13) to form the inner member (2).

12. Assembly method according to claim 11, **characterised in that** each of the rings (18a, 18b) has a groove (19a, 19b) formed in an inner extension (20a, 20b) of the inner edge of the inner track (2a, 2b), the holding element (13) having two feet (21a, 21b) engaged in respectively one of said grooves to ensure the axial holding of said rings.

13. Assembly method according to any one of claims 1 to 12, **characterised in that** the retention cage (8a, 8b) is mounted on the row (3a, 3b) of rollers (3) by relative axial translation of said retention cage with respect to the outer member (1).
